# FASCICULE DE BREVET EUROPEEN

(11) **EP 1 527 950 B1**
(45) Date de publication et mention de la délivrance du brevet: **31.05.2006**
(21) Numéro de dépôt: 04292523.0
(22) Date de dépôt: 25.10.2004
(51) Int. Cl.: B60Q 1/115

(54) **Procédé de correction de l'angle de site d'un projecteur de véhicule automobile**
Methode um die Stellung der Lichtachse eines Fahrzeugscheinwerfers zu kontrollieren.
Method for controlling the pitch angle of a headlight

(30) Priorité: 31.10.2003 FR 0312830; 31.10.2003 FR 0312831
(43) Date de publication de la demande: 04.05.2005
(73) Titulaire: VALEO VISION, 93012 Bobigny Cédex (FR)
(72) Inventeur: Goncalves, Manuel, 75020 Paris (FR); Ba, Sidy, 92310 Sevres (FR)
(74) Mandataire: Renous Chan, Véronique

(56) Documents cités:
- EP-A- 0 825 063
- FR-A- 2 736 881
- FR-A- 2 738 193

## Description

L'invention concerne un procédé de correction automatique de l'angle de site d'au moins un projecteur de véhicule automobile en fonction des variations d'assiette du véhicule.

L'invention concerne plus particulièrement un procédé de correction de l'angle de site d'au moins un projecteur de véhicule automobile en fonction des variations d'assiette d'un véhicule comportant des moyens pour élaborer un signal représentatif de l'assiette instantanée du véhicule, des moyens pour élaborer un signal représentatif de l'amplitude des irrégularités de la route, des moyens pour élaborer un signal représentatif des variations d'accélération longitudinale instantanée du véhicule, et des moyens de correction de l'angle de site du projecteur.

On connaît de nombreux procédés et dispositifs qui sont destinés à corriger l'angle de site de projecteurs de véhicule automobile, et notamment des projecteurs dont les faisceaux éclairent la route selon une direction longitudinale à l'avant du véhicule. Ces procédés et dispositifs ont plus particulièrement pour but de maintenir constante la portée des faisceaux des projecteurs à l'avant du véhicule.

L'orientation de l'angle de site des projecteurs est généralement corrigée en fonction d'un signal représentatif de l'assiette instantanée du véhicule qui est fourni par des capteurs appropriés. De manière connue, la correction peut être réalisée soit selon un mode statique, soit selon un mode dynamique.

Pour la mise en oeuvre du mode de correction statique, le signal d'assiette instantanée est débarrassé de toutes ses composantes transitoires. Le signal ainsi obtenu est représentatif des variations d'assiette dues seulement aux variations de charge du véhicule.

Ce mode de correction est aussi appelé mode de correction « lent », car l'orientation des projecteurs n'est pas modifiée pour des variations « rapides » de l'assiette instantanée du véhicule. Le signal représentatif de l'assiette instantanée du véhicule est par exemple filtré par un filtre passe-bas avec un coefficient de filtrage élevé, de l'ordre de quelques dizaines de secondes.

Pour la mise en oeuvre du mode de correction dynamique, il est tenu compte en temps réel des variations d'assiette dues notamment aux accélérations et aux décélérations du véhicule pour modifier l'orientation des faisceaux d'éclairage. Ces variations d'assiettes sont relativement « rapides », par exemple de l'ordre de la seconde. Par opposition au mode de correction « lent », ce mode de correction est donc qualifié de « rapide ». Par exemple, le signal représentatif de l'assiette instantanée du véhicule est obtenu par filtrage à travers un filtre passe-bas avec un coefficient de filtrage très bas, de l'ordre de la seconde.

Le mode de correction statique est satisfaisant sur le plan de la stabilité des faisceaux de projecteur par rapport au véhicule. Il a cependant ses limites, car les variations d'assiette dues aux phénomènes dynamiques ne sont pas prises en compte. En particulier, pendant les phases d'accélération durant lesquelles le véhicule se cabre, il existe un risque d'éblouissement des conducteurs des véhicules roulant en sens inverse, tandis que pendant les phases de décélération durant lesquelles le véhicule plonge, la portée des projecteurs est réduite.

Le mode de correction dynamique qui est destiné à pallier ces limitations est très difficile à mettre en oeuvre efficacement, car des irrégularités de la chaussée, telles que des nids de poule, risquent d'amener le système de correction à adopter un comportement erratique ou en opposition de phase avec l'effet recherché, qui nuit considérablement au confort visuel et qui risque aussi d'éblouir les conducteurs des véhicules roulant en sens inverse.

Il est connu des procédés et des dispositifs qui sont destinés à sélectionner instantanément l'un ou l'autre des modes de correction statique ou dynamique de manière adéquate en fonction de l'état de la route et en fonction de l'amplitude de la variation d'accélération du véhicule.

Ainsi, le document FR-A-2.738.193 propose un dispositif dans lequel le passage d'un mode de correction à l'autre est effectué en fonction de la valeur d'un signal représentatif de la variation dynamique de l'assiette du véhicule et à partir d'un signal représentatif des irrégularités de la route.

Le dispositif propose plus particulièrement d'élaborer un seuil variant en fonction de la valeur instantanée du signal représentatif des irrégularités de la route. Si la valeur instantanée du signal représentatif de la variation d'assiette dynamique est supérieure au seuil variant, le mode de correction dynamique est appliqué car on estime que les variations d'assiette du véhicule sont provoquées davantage par les variations d'accélération du véhicule que par les irrégularités de la route. Sinon c'est le mode de correction statique qui est appliqué, car la route est considérée comme trop irrégulière.

Ainsi, ce dispositif permet de prendre en compte les variations d'assiette dues aux variations d'accélération du véhicule seulement lorsque l'état de la route n'influe pas de manière significative sur l'assiette du véhicule.

Cependant, lorsque la valeur du signal représentatif des variations d'accélération du véhicule est voisine du seuil variant, il est difficile de distinguer les variations d'assiette dues aux irrégularités de la route de celles dues aux variations d'accélération du véhicule.

L'application de cette solution nécessite donc un compromis sur le choix des coefficients de filtrage lent et rapide. Le procédé ne pourra donc pas être satisfaisant à la fois lorsque la valeur du signal de variation d'assiette est voisine du seuil variant, et lorsque la valeur du signal de variation d'assiette est franchement supérieure ou inférieure audit seuil.

Ainsi pour que la correction soit satisfaisante lorsque la valeur du signal représentatif de l'accélération est supérieurement voisine du seuil variant, il faut calibrer le coefficient de filtrage de façon que le mode de correction rapide ne soit pas trop sensible aux changements d'assiette dus aux irrégularités de la route. Le coefficient de filtrage rapide sera donc plus lent qu'il ne pourrait l'être si on le calibrait pour une route sans irrégularité.

De même, le mode correction lent risque de ne pas prendre en compte des variations d'assiette dues aux variations d'accélération, contrairement aux attentes du conducteur.

Il est également connu des procédés et des dispositifs qui sont destinés à sélectionner instantanément l'un ou l'autre des modes de correction statique ou dynamique de manière adéquate en fonction de l'amplitude des variations d'accélération du véhicule.

Ainsi, il est connu de commuter d'un mode vers l'autre lorsque la valeur du signal représentatif de la variation d'accélération du véhicule franchit, dans un sens ou dans l'autre, un seuil de commutation. Le seuil de commutation est calibré de manière que le mode rapide soit déclenché lorsque la variation d'accélération du véhicule est supérieure aux variations d'assiette causées par une route irrégulière de référence.

Cependant, le seuil de commutation est choisi de manière arbitraire en considérant pour son calibrage une route irrégulière de référence qui n'est pas représentative des différents états des routes sur lesquelles le véhicule est susceptible rouler. Il est donc possible que l'orientation des faisceaux soit corrigée selon le mode rapide alors que le véhicule roule sur une route dont les irrégularités provoquent des perturbations néfastes au résultat de la correction.

Selon un premier aspect, l'invention propose un procédé de correction de l'angle de site d'au moins un projecteur de véhicule automobile en fonction des variations d'assiette d'un véhicule comportant des moyens pour élaborer un signal représentatif de l'assiette instantanée du véhicule, des moyens pour élaborer un signal représentatif de l'amplitude des irrégularités de la route, des moyens pour élaborer un signal représentatif de l'amplitude des variations d'accélération longitudinale instantanée du véhicule, et des moyens de correction de l'angle de site du projecteur, caractérisé en ce qu'il comporte :
- une première étape de calcul d'un critère dynamique instantané qui est égal à la différence entre la valeur instantanée du signal représentatif de la variation d'accélération et d'un signal représentatif de l'amplitude des irrégularités de la route qui est élaboré en fonction de la valeur instantanée du signal représentatif des irrégularités de la route ;
- une deuxième étape de détermination d'un coefficient de filtrage, au cours de laquelle on affecte au coefficient de filtrage une valeur maximale ou une valeur minimale selon que le critère dynamique instantané est positif ou négatif ;
- une troisième étape de filtrage, au cours de laquelle le signal représentatif de l'assiette est filtré par des moyens de filtrage en fonction du coefficient de filtrage déterminé au cours de la deuxième étape ; et
- une quatrième étape de correction de l'angle de site du projecteur par l'intermédiaire des moyens de correction, en fonction du signal filtré durant la troisième étape.

Selon d'autres caractéristiques de l'invention :
- au cours de la deuxième étape, on affecte au coefficient de filtrage la valeur minimale, la valeur maximale ou au moins une valeur intermédiaire, selon que la valeur du critère dynamique instantané est respectivement inférieure à une borne inférieure négative, supérieure à une borne supérieure positive, ou comprise dans une plage de valeurs entre la borne inférieure et la borne supérieure ;
- ladite plage de valeurs comporte au moins une portion qui est délimitée par une limite inférieure et par une limite supérieure, et dans laquelle la valeur intermédiaire du coefficient de filtrage est une constante qui est indépendante de la valeur du critère dynamique instantané ;
- la fonction qui associe le coefficient de filtrage au critère dynamique, est une fonction croissante par paliers ;
- ladite plage de valeurs comporte au moins une portion qui est délimitée par une limite inférieure et par une limite supérieure, et dans laquelle la valeur intermédiaire du coefficient de filtrage est proportionnelle à la valeur du critère dynamique ;
- la fonction qui associe le coefficient de filtrage au critère dynamique, est une fonction continue globalement croissante;
- le signal représentatif de la variation instantanée de l'accélération longitudinale du véhicule est élaboré par les moyens d'élaboration du signal représentatif de la variation d'accélération en fonction du signal d'assiette instantanée ;
- les moyens d'élaboration du signal représentatif de la variation d'accélération comportent des capteurs d'accélération longitudinale ;
- la limite inférieure d'au moins une des portions de plage de valeurs du critère dynamique est ajustable en fonction du signal représentatif des irrégularités de la route ;
- la valeur ajustable de la limite inférieure est égale à la somme d'une valeur de référence plus la valeur du signal représentatif des irrégularités de la route ;
- le signal représentatif des irrégularités de la route est élaboré à partir de signaux émis par des capteurs d'accélération longitudinale;
- le signal représentatif des irrégularités de la route est élaboré à partir du signal représentatif de l'assiette instantanée du véhicule.

Selon un second aspect, l'invention propose un procédé de correction de l'angle de site d'au moins un projecteur de véhicule automobile en fonction des variations d'assiette du véhicule, le véhicule comportant des moyens pour élaborer un signal représentatif de l'assiette instantanée du véhicule, des moyens pour élaborer un signal représentatif des variations d'accélération longitudinale du véhicule et des moyens de correction de l'angle de site du projecteur, du type qui comporte :
- une première étape de comparaison au cours de laquelle on compare la valeur du signal représentatif des variations d'accélération avec un seuil de commutation déterminé ;
- une deuxième étape de détermination d'un coefficient de filtrage au cours de laquelle on affecte au coefficient de filtrage une valeur maximale ou une valeur minimale selon que la comparaison de la première étape indique que la valeur du signal représentatif des variations d'accélération est inférieure ou supérieure au seuil de commutation ;
- une troisième étape de filtrage au cours de laquelle le signal représentatif de l'assiette est filtré par des moyens de filtrage en fonction du coefficient de filtrage déterminé au cours de la deuxième étape ; et
- une quatrième étape de correction de l'angle de site du projecteur par l'intermédiaire des moyens de correction, en fonction du signal filtré ;
caractérisé en ce que le véhicule comporte des moyens pour élaborer un signal représentatif des irrégularités de la route, et en ce que, au cours de la deuxième étape, la valeur minimale du coefficient de filtrage est variable en fonction de la valeur du signal représentatif des irrégularités de la route.

Selon d'autres caractéristiques de l'invention :
- le véhicule comporte des moyens pour effectuer une moyenne sur le signal représentatif des irrégularités de la route, et en ce que la valeur minimale du coefficient de filtrage est proportionnelle à la moyenne obtenue par l'intermédiaire desdits moyens ;
- lors de la première étape, le seuil de commutation est déterminé en fonction de la valeur du signal représentatif des irrégularités de la route.

D'autres caractéristiques et avantages apparaîtront au cours de la lecture de la description détaillée qui va suivre, pour la compréhension de laquelle on se reportera aux dessins en annexe, parmi lesquels :
- la figure 1 représente schématiquement un dispositif pour mettre en oeuvre un procédé réalisé selon les enseignements de l'invention afin de corriger l'angle de site d'un véhicule automobile en filtrant un signal brut représentatif de l'assiette du véhicule avec un coefficient de filtrage variable ;
- la figure 2 représente schématiquement un second mode de réalisation du dispositif de la figure 1 ;
- la figure 3 est un schéma-bloc d'un premier mode de réalisation préféré du procédé selon les enseignements de l'invention qui est destiné à être mis en oeuvre par les dispositifs des figures 1 et 2 ;
- la figure 4 est un graphique qui représente la valeur du coefficient de filtrage variable en fonction de la valeur d'un critère dynamique qui est élaboré à partir d'un signal représentatif des irrégularités de la route et à partir d'un signal représentatif des variations d'accélération longitudinale du véhicule ;
- la figure 5 est un graphique qui représente une variante du graphique de la figure 4 ;
- la figure 6 est un graphique qui représente une autre variante du graphique de la figure 4 ;
- la figure 7 est un graphique qui représente une autre variante du graphique de la figure 4 ;
- la figure 8 est un schéma-bloc d'un second mode de réalisation préféré du procédé selon les enseignements de l'invention qui est destiné à être mis en oeuvre par les dispositifs des figures 1 et 2 ; et
- la figure 9 est un graphique qui représente la valeur du coefficient de filtrage variable en fonction du signe d'une opération de soustraction réalisée entre un signal représentatif des variations d'accélération longitudinale du véhicule et un seuil de commutation.

Dans la suite de la description, on adoptera à titre non limitatif une orientation longitudinale, verticale ou transversale selon l'orientation traditionnellement utilisée dans l'automobile.

Dans la suite de la description, on considèrera, de manière non limitative, que le coefficient de filtrage d'un filtre passe-bas correspond à la fréquence de coupure du filtre.

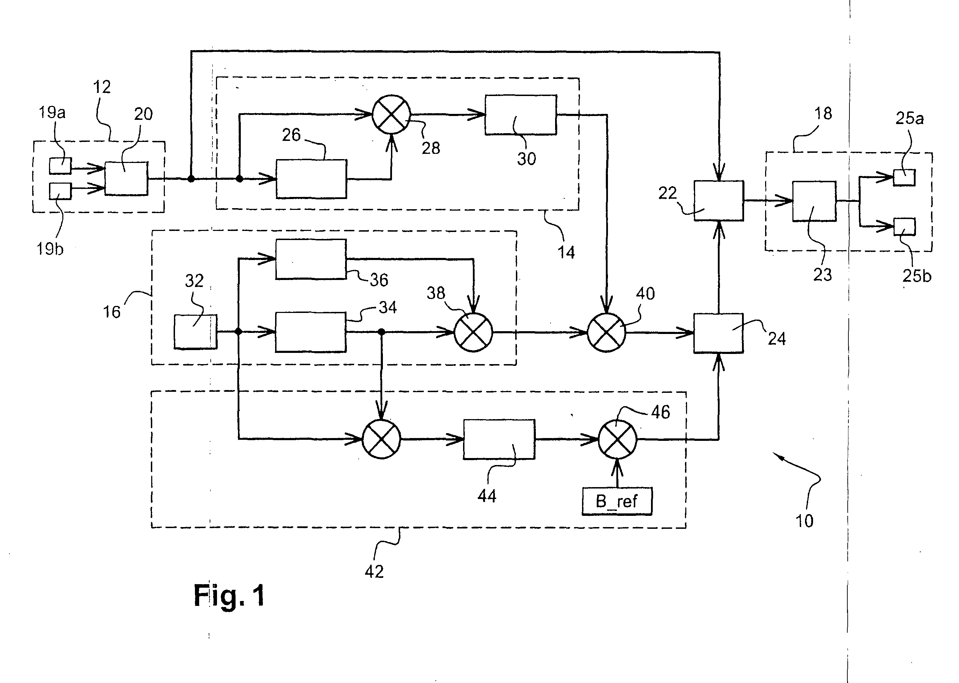

En référence aux figures 1 à 7, il est maintenant décrit un premier mode de réalisation préféré du procédé selon l'invention et différentes variantes correspondantes.

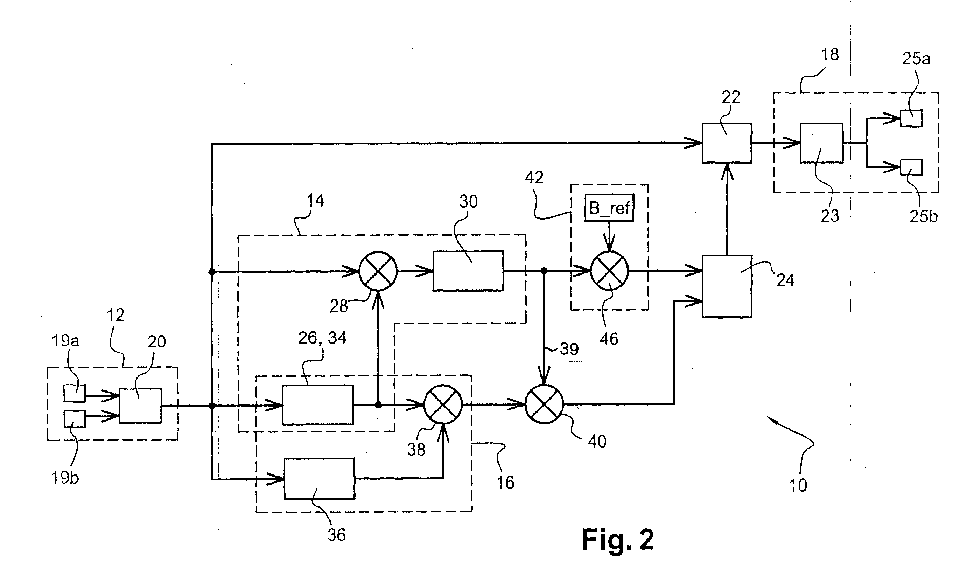

On a représenté aux figures 1 et 2 un dispositif 10 qui est destiné à mettre en oeuvre ce premier mode de réalisation préféré du procédé selon l'invention pour corriger l'angle de site de projecteurs (non représentés), notamment avant, d'un véhicule automobile.

Un tel dispositif 10 comporte ici de manière connue des moyens 12 pour élaborer un signal brut S_ass représentatif de l'assiette instantanée du véhicule, et des moyens 22 pour filtrer ledit signal S_ass avec un coefficient de filtrage variable K22 dont la valeur est déterminée en fonction de l'état de la route et en fonction de l'amplitude des variations d'accélération longitudinale du véhicule. Le dispositif 10 comporte aussi des moyens 18 de correction de l'angle de site des projecteurs qui sont commandés en fonction du signal d'assiette S_ass_22 ainsi filtré.

Les moyens 12 pour élaborer le signal brut S_ass représentatif de l'assiette instantanée comportent ici des capteurs 19a et 19b qui sont agencés au niveau des essieux avant et arrière (non représentés) du véhicule respectivement. Les capteurs 19a et 19b délivrent des signaux électriques représentatifs de la distance entre l'essieu respectif et la caisse du véhicule.

Les signaux issus des capteurs 19a et 19b sont ensuite traités par un circuit 20 qui produit à partir de ceux-ci et à partir d'une information d'entraxe longitudinal entre les essieux, le signal brut S_ass représentatif de l'assiette instantanée du véhicule.

Les moyens 22 pour filtrer le signal brut d'assiette S_ass comportent un filtre passe-bas 22 dont le coefficient de filtrage K22 est réglable.

Les moyens 18 de correction de l'angle de site des projecteurs comportent une unité de calcul 23 qui calcule la correction d'orientation à effectuer en fonction du signal d'assiette S_ass_22 filtré par le filtre réglable 22.

L'unité de calcul de correction 23 commande deux actionneurs 25a et 25b qui sont chacun associé à un projecteur avant (non représenté) du véhicule pour régler l'orientation en site des faisceaux d'éclairage.

Le coefficient de filtrage variable K22 du filtre réglable 22 est calculé par une unité de calcul 24 à partir d'un signal S_bruit qui est représentatif de l'amplitude des irrégularités de la route et qui est produit par des moyens 14, et à partir d'un signal S_varacc représentatif des variations d'accélération longitudinale du véhicule qui est produit par des moyens 16.

Les moyens 14 comportent des moyens pour élaborer un signal représentatif des irrégularités de la route S_route à partir duquel le signal représentatif de l'amplitude des irrégularités de la route S_bruit est calculé.

Ainsi, les moyens 14 comportent un filtre passe-bas 26 qui est destiné à éliminer les fréquences parasites du signal brut d'assiette S_ass, et notamment toutes les variations brusques de cette assiette de manière à éliminer les composantes du signal S_ass non représentatives de l'assiette réelle du véhicule. Le coefficient de filtrage K26 du filtre 26 est de préférence de l'ordre de quelques secondes, c'est-à-dire que tout phénomène transitoire ayant une durée inférieure à cette constante de temps K26, et notamment tout phénomène causé par les irrégularités de la route, est éliminé du signal brut S_ass. En revanche, les variations d'assiette dues aux accélérations, freinages, ou virages sont conservées.

Les moyens 14 comportent aussi un soustracteur 28 qui exécute la soustraction du signal d'assiette filtré S_ass_26 par le filtre 26 moins le signal brut d'assiette S_ass, le résultat de la soustraction étant exprimé en valeur absolue. Le soustracteur 28 produit ainsi le signal S_route représentatif des irrégularités de la route.

Ce dernier signal S_route est ensuite filtré par un filtre passe-bas 30. Le filtre 30 élabore un signal représentatif de l'amplitude des irrégularités de la route S_bruit en effectuant une moyenne sur le signal représentatif des irrégularités de la route S_route.

Comme représenté à la figure 1, les moyens 16 pour élaborer le signal S_varacc représentatif des variations d'accélération longitudinal du véhicule comportent ici un capteur 32 qui délivre un signal électrique brut S_acc représentatif des accélérations longitudinales du véhicule. Le capteur 32 est par exemple agencé au niveau d'une roue (non représentée) du véhicule.

Le signal brut d'accélération S_acc comporte généralement des composantes transitoires qui sont dues à des irrégularités de la route. Les moyens 16 sont destinés à éliminer ces composantes transitoires.

Les moyens 16 comportent à cet effet deux filtres passe-bas 34 et 36 qui sont destinés à filtrer simultanément le signal brut d'accélération S_acc. Le coefficient de filtrage K36 du second filtre 36 est supérieur au coefficient K34 du premier filtre 34.

Le coefficient de filtrage K34 du premier filtre 34 est de l'ordre de quelques secondes. Il est suffisamment élevé pour éliminer du signal brut d'accélération S_acc les composantes transitoires qui sont dues aux irrégularités de la route. Par contre, les composantes dynamiques du signal brut S_acc qui sont dues aux variations d'accélération sont conservées.

Les moyens 16 comportent aussi un soustracteur 38 qui exécute une soustraction du signal S_acc_34 filtré par le premier filtre 34 moins le signal S_acc_36 filtré par le second filtre 36, le résultat de cette opération étant exprimé en valeur absolue. Il en résulte le signal S_varacc représentatif des variations d'accélération longitudinale du véhicule.

Selon une variante de réalisation du dispositif 10 qui est représentée à la figure 2, le signal représentatif des variations d'accélération du véhicule S_varacc est élaboré comme décrit précédemment en fonction du signal brut représentatif de l'assiette du véhicule S_ass au lieu du signal représentatif de l'accélération longitudinale du véhicule S_acc. Ainsi, le dispositif 10 est avantageusement moins onéreux à réaliser. Dans cette variante, un unique filtre 34 joue à la fois le rôle du filtre 34 des moyens 16 et le rôle du filtre 26 des moyens 14.

Avant que l'unité de calcul 24 n'élabore le coefficient de filtrage variable K22 du filtre réglable 22, un critère dynamique C_dyn est calculé en fonction du signal représentatif de l'amplitude des irrégularités de la route S_bruit et en fonction du signal représentatif des variations d'accélération longitudinale S_varacc, qui ont été ainsi obtenus.

Le dispositif 10 comporte à cet effet un soustracteur 40 qui effectue une soustraction entre le signal représentatif de l'amplitude des irrégularités de la route S_bruit moins le signal représentatif des variations d'accélération longitudinale du véhicule S_varacc. Le soustracteur 40 produit ainsi le critère dynamique C_dyn qui permet à l'unité 24 de déterminer le coefficient de filtrage variable K22 du filtre réglable 22.

Selon une variante, le signal représentatif de l'amplitude des irrégularités de la route S_bruit et/ou le signal représentatif des variations d'accélération S_varacc sont pondérés avant d'être soustrait l'un de l'autre. La pondération peut être effectuée en ajustant les coefficients de filtrage K26 et/ou K36 et/ou K34 des filtres 26, 36, 34. Il est aussi possible d'ajuster le gain de ces mêmes filtres 26, 36, 34.

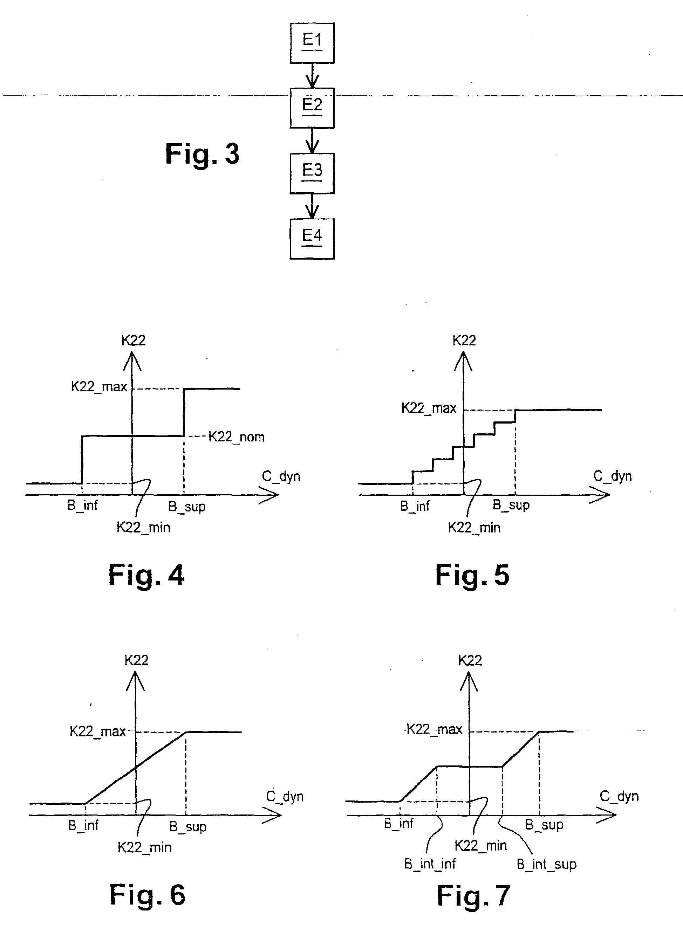

Le dispositif 10 est ainsi susceptible de mettre en oeuvre le procédé qui est représenté à la figure 3 et qui comporte les étapes suivantes :
- une première étape E1 au cours de laquelle on calcule le critère dynamique instantané C_dyn qui est calculé par le soustracteur 40 comme décrit précédemment ;
- une deuxième étape E2 de détermination par l'unité de calcul 24 du coefficient de filtrage variable K22 du filtre réglable 22 ;
- une troisième étape E3 de filtrage, au cours de laquelle le signal brut représentatif de l'assiette S_ass est filtré par le filtre réglable 22 en fonction du coefficient de filtrage variable K22 déterminé au cours de la deuxième étape E2 ;
- une quatrième étape E4 de correction de l'angle de site du projecteur en fonction du signal d'assiette filtré S_ass_22 par l'intermédiaire des moyens de correction 18.

Conformément aux enseignements de l'invention, le coefficient de filtrage variable K22 est déterminé par l'unité de calcul 24 lors de la deuxième étape E2 de la manière suivante.

La figure 4 est une courbe qui représente la valeur du coefficient de filtrage variable K22 en fonction de la valeur du critère dynamique C_dyn.

Le coefficient de filtrage variable K22 est susceptible de prendre une valeur maximale K22_max, une valeur minimale K22_min ou au moins une valeur intermédiaire K22_nom. Comme décrit en préambule, la valeur maximale K22_max correspond au mode de correction statique du dispositif 10, tandis que la valeur minimale K22_min correspond au mode de correction dynamique du dispositif 10. Selon l'invention, le dispositif 10 est donc susceptible de corriger l'orientation des projecteurs selon un mode de correction intermédiaire.

On affecte au coefficient de filtrage K22 la valeur maximale K22_max lorsque le critère dynamique C_dyn est supérieur à une borne supérieure positive B_sup. Sur la figure 4, la fonction comporte un palier supérieur qui s'étend horizontalement depuis la borne supérieure B_sup jusqu'à l'infini.

De manière similaire, on affecte au coefficient de filtrage K22 la valeur minimale K22_min lorsque le critère dynamique C_dyn est inférieur à une borne inférieure négative B_inf.

Selon une première technique selon l'invention représentée à la figure 4, lorsque le critère dynamique C_dyn est situé dans la plage de valeurs qui est comprise entre la borne inférieure B_inf et la borne supérieure B_sup, le coefficient de filtrage K22 prend une unique valeur nominale K22_nom qui est intermédiaire entre la valeur minimale K22_min et la valeur maximale K22_max.

Ainsi, les valeurs que peut prendre le coefficient de filtrage K22 sont étagées en fonction du critère dynamique C_dyn. Lorsque la valeur du signal représentatif des variations d'accélération S_varacc est voisine de la valeur du signal représentatif de l'amplitude des irrégularités de la route S_bruit, le critère dynamique C_dyn est en effet compris entre la borne inférieure B_inf et la borne supérieure B_sup. La correction de l'orientation des projecteurs est alors effectuée suffisamment rapidement pour prendre en compte les changements d'assiette dus aux accélérations du véhicule, mais aussi suffisamment lentement pour ne pas réagir aux soubresauts du véhicule dus aux irrégularités de la route. De cette manière, il n'est plus nécessaire de faire de compromis pour choisir les valeurs maximale K22_max et minimale K22_min du filtre réglable 22.

Selon une seconde technique selon l'invention représentée à la figure 5, pour la plage de valeurs du critère dynamique C_dyn comprise entre la borne inférieure B_inf et la borne supérieure B_sup, la valeur du coefficient de filtrage K22 croît par paliers en fonction de la valeur du critère dynamique C_dyn depuis la valeur minimale K22_min jusqu'à la valeur maximale K22_max. Le coefficient de filtrage variable K22 est ainsi susceptible de prendre des valeurs discrètes qui croissent lorsque la valeur du critère dynamique C_dyn croît.

Selon une troisième technique selon l'invention représentée à la figure 6, pour au moins une portion de ladite plage de valeurs du critère dynamique C_dyn, le coefficient de filtrage K22 croît de manière continue proportionnellement à la valeur du critère dynamique C_dyn.

Selon une variante représentée à la figure 7, il est possible de combiner les trois techniques selon l'invention décrites précédemment. Ainsi, pour une portion de la plage qui s'étend de la borne inférieure B_inf à une limite intermédiaire inférieure B_int_inf, la valeur du coefficient de filtrage K22 croît proportionnellement à la valeur du critère dynamique C_dyn depuis la valeur minimale K22_min jusqu'à une valeur nominale K22_nom. Puis, pour une portion qui s'étend de la limite intermédiaire inférieure B_int_inf jusqu'à une limite intermédiaire supérieure B_int_sup, on affecte au coefficient de filtrage K22 l'unique valeur nominale K22_nom. Enfin, pour une portion de la plage comprise entre la limite intermédiaire supérieure B_int_sup et la borne supérieure B_sup, le coefficient de filtrage K22 croît proportionnellement au critère dynamique C_dyn jusqu'à la valeur maximale K22_max.

Ainsi, la fonction qui est représentée à la figure 7 et qui associe le coefficient de filtrage K22 au critère dynamique C_dyn, est une fonction continue globalement croissante.

Selon une quatrième technique selon l'invention qui est applicable indifféremment aux trois techniques selon l'invention décrites précédemment, la borne inférieure B_inf de la plage et/ou au moins une limite intermédiaire B_int_inf ou B_int_sup qui délimite inférieurement une portion de la plage, est ajustable en fonction du signal représentatif des irrégularités de la route S_route, et plus précisément en fonction du signal représentatif de l'amplitude des irrégularités de la route S_bruit. Pour simplifier la notation, la borne ajustable sera indiquée par la référence B'.

Comme représenté à la figure 2, la borne ou la limite ajustée B' est calculée par des moyens 42 qui comprennent un opérateur 46 qui additionne le signal S_bruit à une constante B_ref. La constante B_ref est par exemple la valeur de la borne ajustable lorsque la route est régulière. La valeur résultant de cette opération est alors affectée à la borne ajustable B'.

En référence à la figure 1, la valeur de la borne ajustée B' peut, en variante, être calculée en fonction d'un second signal représentatif des irrégularités de la route S_route_bis qui est élaboré à partir du signal brut d'accélération S_acc. A cette fin, les moyens 42 comportent ici des éléments similaires ou analogues aux moyens 14 d'élaboration du premier signal représentatif des irrégularités de la route S_route. Les moyens 42 comprennent en outre un filtre passe-bas 44 qui a la même fonction que le filtre 30 des moyens 14.

En référence à la figure 3, cette étape supplémentaire de calcul de la valeur de la borne ajustable B' est réalisée entre la première étape E1 et la deuxième étape E2.

En référence aux figures 1, 2, 7 et 8, il est maintenant décrit un second mode de réalisation préféré du procédé selon l'invention et différentes variantes correspondantes.

En référence aux figures 1 et 2, on notera ici que bien que le dispositif 10 mettant en oeuvre ce second mode de réalisation préféré du procédé selon l'invention soit représenté par des blocs-diagrammes semblables à ceux du dispositif 10 mettant en oeuvre le premier mode de réalisation préféré du procédé selon l'invention décrit plus haut, les deux dispositifs diffèrent notamment par la nature des signaux traités et produits.

En référence plus particulièrement à la figure 2, le dispositif 10 comporte ici de manière connue des moyens 12 pour élaborer un signal brut S_ass représentatif de l'assiette instantanée du véhicule, et des moyens 22 pour filtrer ledit signal S_ass avec un coefficient de filtrage variable K22 dont la valeur est déterminée en fonction de l'état de la route et en fonction de l'amplitude des variations d'accélération longitudinale du véhicule. Le dispositif 10 comporte aussi des moyens 18 de correction de l'angle de site des projecteurs qui sont commandés en fonction du signal d'assiette S_ass_22 ainsi filtré.

Les moyens 12 pour élaborer le signal brut S_ass représentatif de l'assiette instantanée comportent ici des capteurs 19a et 19b qui sont agencés au niveau des essieux avant et arrière (non représentés) du véhicule respectivement. Les capteurs 19a et 19b délivrent des signaux électriques représentatifs de la distance entre l'essieu respectif et la caisse du véhicule.

Les signaux issus des capteurs 19a et 19b sont ensuite traités par un circuit 20 qui produit à partir de ceux-ci et à partir d'une information d'entraxe longitudinal entre les essieux, le signal brut S_ass représentatif de l'assiette instantanée du véhicule.

Les moyens 22 pour filtrer le signal brut d'assiette S_ass comportent un filtre passe-bas 22 à coefficient de filtrage K22 réglable.

Les moyens 18 de correction de l'angle de site des projecteurs comportent une unité de calcul 23 qui calcule la correction d'orientation à effectuer en fonction du signal d'assiette S_ass_22 filtré par le filtre réglable 22.

L'unité de calcul de correction 23 commande deux actionneurs 25a et 25b qui sont chacun associé à un projecteur avant (non représenté) du véhicule pour régler l'orientation en site des faisceaux d'éclairage.

Le coefficient de filtrage variable K22 du filtre réglable 22 est calculé par une unité de calcul 24 à partir d'un signal S_valmin qui est produit par des moyens 14 et à partir d'un signal S_varacc représentatif des variations d'accélération longitudinale du véhicule qui est produit par des moyens 16.

Les moyens 14 comportent des moyens pour élaborer un signal représentatif des irrégularités de la route S_route à partir duquel le signal de seuil S_valmin est calculé.

Ainsi, les moyens 14 comportent un filtre passe-bas 26 qui est destiné à éliminer les fréquences parasites du signal brut d'assiette S_ass, et notamment toutes les variations brusques de cette assiette de manière à éliminer les composantes du signal S_ass non représentatives de l'assiette réelle du véhicule. Le coefficient de filtrage K26 du filtre 26 est de préférence de l'ordre de quelques secondes, c'est-à-dire que tout phénomène transitoire ayant une durée inférieure à cette constante de temps K26, et notamment tout phénomène causé par les irrégularités de la route, est éliminé du signal brut S_ass. En revanche, les variations d'assiette dues aux accélérations, freinages, ou virages sont conservées.

Les moyens 14 comportent aussi un soustracteur 28 qui exécute la soustraction du signal d'assiette filtré S_ass_26 par le filtre 26 moins le signal brut d'assiette S_ass, le résultat de la soustraction étant exprimé en valeur absolue. Le soustracteur 28 produit ainsi le signal S_route représentatif des irrégularités de la route.

Ce dernier signal S_route est ensuite filtré par un filtre passe-bas 30. Le filtre 30 élabore un signal de valeur minimale variante S_valmin en effectuant une moyenne sur le signal représentatif des irrégularités de la route S_route.

Comme représenté à la figure 1, les moyens 16 élaborent le signal S_varacc représentatif des variations d'accélération longitudinal du véhicule à partir du signal brut représentatif de l'assiette du véhicule S_ass.

Le signal brut d'assiette S_ass comporte généralement des composantes transitoires qui sont dues à des irrégularités de la route, et des composantes dynamiques qui sont dues aux variations d'accélération longitudinale du véhicule. Les moyens 16 sont destinés à éliminer ces composantes transitoires pour ne conserver que les composantes dynamiques.

Les moyens 16 comportent à cet effet deux filtres passe-bas 34 et 36 qui sont destinés à filtrer simultanément le signal brut d'assiette S_ass. Le coefficient de filtrage K36 du second filtre 36 est supérieur au coefficient K34 du premier filtre 34.

Le coefficient de filtrage K34 du premier filtre 34 est de l'ordre de quelques secondes. Il est suffisamment élevé pour éliminer du signal brut d'assiette S_ass les composantes transitoires qui sont dues aux irrégularités de la route. Par contre, les composantes dynamiques du signal brut S_ass qui sont dues aux variations d'accélération sont conservées.

Les moyens 16 comportent aussi un soustracteur 38 qui exécute une soustraction du signal S_ass_34 filtré par le premier filtre 34 moins le signal S_ass_36 filtré par le second filtre 36, le résultat de cette opération étant exprimé en valeur absolue. Il en résulte le signal S_varacc représentatif des variations d'accélération longitudinale du véhicule.

En variante, le signal représentatif des variations d'accélération du véhicule S_varacc est élaboré comme décrit précédemment, mais, comme montré à la figure 1, en substituant au signal brut représentatif de l'assiette du véhicule S_ass, un signal représentatif de l'accélération longitudinale du véhicule qui est obtenu par un capteur d'accélération 32 par exemple agencé au niveau d'une roue du véhicule.

Avant que l'unité de calcul 24 n'élabore le coefficient de filtrage variable K22 du filtre réglable 22, le signal représentatif des variations d'accélération longitudinale S_varacc ainsi obtenu est comparé avec un seuil de commutation prédéterminé 39. Le seuil de commutation 39 est par exemple calibré en considérant que le véhicule roule sur une route irrégulière de référence sur laquelle :
- les variations d'assiette du véhicule sont provoquées davantage par les irrégularités de la route lorsque la valeur du signal représentatif de variations d'accélération longitudinale est inférieure au seuil commutation 39 ; et
- les variations d'assiette du véhicule sont provoquées davantage par les variations d'accélération longitudinale du véhicule lorsque la valeur du signal représentatif de variations d'accélération longitudinale est supérieure au seuil de commutation 39.

Selon une variante non représentée, le seuil de commutation 39 peut être variable, par exemple en fonction de la valeur du signal représentatif des irrégularités de la route S_route.

Le dispositif 10 comporte à cet effet un soustracteur 40 qui effectue une soustraction entre le seuil prédéterminé 39 moins le signal représentatif des variations d'accélération longitudinale du véhicule S_varacc. Le signe du résultat délivré par le soustracteur 40, ainsi que la valeur du signal de valeur minimale S_valmin, permettent à l'unité 24 de déterminer le coefficient de filtrage variable K22 du filtre réglable 22.

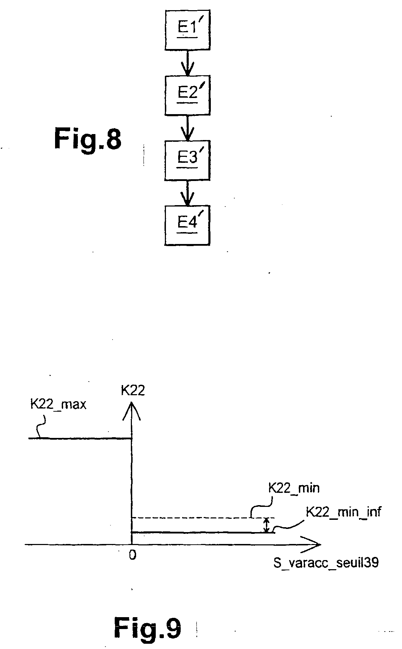

Le dispositif 10 est ainsi susceptible de mettre en oeuvre le procédé qui est représenté à la figure 8 et qui comporte les étapes suivantes :
- une première étape E1' de comparaison au cours de laquelle le soustracteur 40 compare la valeur du signal représentatif des variations d'accélération S_varacc avec le seuil de commutation 39 ;
- une deuxième étape E2' de détermination d'un coefficient de filtrage au cours de laquelle on affecte au coefficient de filtrage K22 une valeur maximale K22_max ou une valeur minimale K22_min selon que le résultat de la comparaison de la première étape E1' est négatif ou positif ;
- une troisième étape E3' de filtrage au cours de laquelle le signal représentatif de l'assiette S_ass est filtré par les moyens de filtrage 22 en fonction du coefficient de filtrage K22 déterminé au cours de la deuxième étape E2' ;
- une quatrième étape E4' de correction de l'angle de site du projecteur par l'intermédiaire des moyens de correction 18, en fonction du signal d'assiette filtré S_ass_22.

Conformément aux enseignements de l'invention, le coefficient de filtrage variable K22 est déterminé par l'unité de calcul 24 lors de la deuxième étape E2' de la manière suivante.

Au cours de la deuxième étape E2', l'unité de calcul 24 défini le mode de correction, statique ou dynamique, qui est appliqué à l'orientation des projecteurs en fonction du signe de l'opération réalisée par le soustracteur 40.

On a représenté à la figure 9 une courbe qui représente la valeur du coefficient de filtrage variable K22 en ordonnée et la valeur S_varacc_seuil39 de l'opération de soustraction réalisée par le soustracteur 40. La courbe comporte ici deux paliers horizontaux qui correspondent aux deux valeurs K22_max et K22_min que le coefficient de filtrage variable K22 est susceptible de prendre en fonction du signe, respectivement négatif ou positif, du résultat de l'opération réalisée par le soustracteur 40. Le palier horizontal K22_min, correspondant à un signe positif du résultat de la soustraction, est mobile au-dessus d'une borne inférieure K22_min_inf. La valeur maximum K22_max du coefficient de filtrage K22 correspond à un fonctionnement du dispositif 10 selon le mode statique, tandis que la valeur minimum K22_min correspond à un fonctionnement selon le mode dynamique.

Ainsi, comme représenté à la figure 9, lorsque le signe de l'opération est négatif, c'est-à-dire que la valeur du signal représentatif de la variation d'accélération longitudinale du véhicule S_varacc est inférieure au seuil de commutation 39, le mode statique est activé. L'unité de calcul 24 affecte alors la valeur maximale K22_max au coefficient de filtrage variable K22 du filtre réglable 22. La valeur K22_max est suffisamment élevée pour que le signal brut d'assiette S_ass soit débarrassé de toutes les composantes transitoires lors du filtrage à travers le filtre 22.

Lorsque le signe de l'opération est positif, c'est-à-dire que la valeur du signal représentatif de la variation d'accélération longitudinale du véhicule est supérieure au seuil de commutation 39, le mode dynamique est activé. L'unité de calcul 24 affecte alors la valeur minimale K22_min au coefficient de filtrage variable K22 du filtre réglable 22.

Selon les enseignements de l'invention, la valeur minimale K22_min est variable en fonction de la valeur du signal représentatif des irrégularités de la route S_route.

Plus particulièrement, la valeur minimale K22_min est ici proportionnelle à la valeur du signal de valeur minimale S_valmin qui a été calculé précédemment.

De cette façon, lorsque la route est régulière, c'est-à-dire que la valeur du signal représentatif des irrégularités de la route est négligeable, la valeur minimale K22_min_inf a une valeur très basse de référence, de l'ordre de la seconde. Ainsi, lors du filtrage du signal brut d'assiette S_ass, le filtre réglable 22 conserve globalement la totalité des composantes transitoires du signal S_ass qui sont ici sensiblement causées par les variations d'accélération longitudinale du véhicule.

Lorsque la route est irrégulière, c'est-à-dire que la valeur du signal représentatif des irrégularités de la route S_route est sensiblement supérieur à zéro, la valeur minimale K22_min est supérieure à la valeur minimale de référence K22_min_inf. De cette façon, le filtre réglable 22 élimine du signal brut d'assiette S_ass les composantes transitoires qui sont dues aux irrégularités de la route tout en conservant une partie des composantes transitoires qui sont dues aux variations d'accélération longitudinale du véhicule.

Selon une variante non représentée de l'invention, la valeur minimale du coefficient de filtrage variable K22_min est calculée simultanément à l'opération de détermination du mode de correction applicable.

Selon encore une autre variante, l'unité de calcul 24 calcule la valeur minimale K22_min avant l'opération de détermination du mode de correction applicable.

Selon une autre variante non représentée, au cours de la deuxième étape E2', la valeur maximale K22_max du coefficient de filtrage K22 varie de façon simultanée et identique à la valeur minimale K22_min.

Conformément à l'invention, les éléments nécessaires à la réalisation du dispositif selon l'invention peuvent être réalisés concrètement par des circuits analogiques, par des circuits numériques en logique câblée ou encore par un microprocesseur associé à des mémoires et à des circuits d'entrée/sortie.

## Revendications

1. Procédé de correction de l'angle de site d'au moins un projecteur de véhicule automobile en fonction des variations d'assiette d'un véhicule comportant des moyens (12) pour élaborer un signal (S_ass) représentatif de l'assiette instantanée du véhicule, des moyens (14) pour élaborer un signal (S_bruit) représentatif de l'amplitude des irrégularités de la route, des moyens (16) pour élaborer un signal (S_varacc) représentatif de l'amplitude des variations d'accélération longitudinale instantanée du véhicule, et des moyens (18) de correction de l'angle de site du projecteur,
**caractérisé en ce qu'**il comporte :
- une première étape (E1) de calcul d'un critère dynamique instantané (C_dyn) qui est égal à la différence entre la valeur instantanée du signal (S_varacc) représentatif de la variation d'accélération et d'un signal (S_bruit) représentatif de l'amplitude des irrégularités de la route qui est élaboré en fonction de la valeur instantanée du signal représentatif des irrégularités de la route (S_route) ;
- une deuxième étape (E2) de détermination d'un coefficient de filtrage (K22), au cours de laquelle on affecte au coefficient de filtrage (K22) une valeur maximale (K22_max) ou une valeur minimale (K22_min) selon que le critère dynamique instantané est positif ou négatif ;
- une troisième étape (E3) de filtrage, au cours de laquelle le signal (S_ass) représentatif de l'assiette est filtré par des moyens de filtrage (22) en fonction du coefficient de filtrage (K22) déterminé au cours de la deuxième étape (E2) ; et
- une quatrième étape (E4) de correction de l'angle de site du projecteur par l'intermédiaire des moyens de correction (18), en fonction du signal filtré (S_ass_22) durant la troisième étape (E3).

2. Procédé selon la revendication 1, **caractérisé en ce que**, au cours de la deuxième étape (E2), on affecte au coefficient de filtrage (K22) la valeur minimale (K22_min), la valeur maximale (K22_max) ou au moins une valeur intermédiaire (K22_nom), selon que la valeur du critère dynamique instantané (C_dyn) est respectivement inférieure à une borne inférieure négative (B_inf), supérieure à une borne supérieure positive (B_sup), ou comprise dans une plage de valeurs entre la borne inférieure (B_inf) et la borne supérieure (B_sup).

3. Procédé selon la revendication 2, **caractérisé en ce que** ladite plage de valeurs comporte au moins une portion qui est délimitée par une limite inférieure (B_inf, B_int_inf) et par une limite supérieure (B_int_sup, B_sup), et dans laquelle la valeur intermédiaire du coefficient de filtrage (K22) est une constante (K22_nom) qui est indépendante de la valeur du critère dynamique instantané (C_dyn).

4. Procédé selon la revendication 3, **caractérisé en ce que** la fonction qui associe le coefficient de filtrage (K22) au critère dynamique (C_dyn), est une fonction croissante par paliers.

5. Procédé selon l'une quelconque des revendications 2 ou 3, **caractérisé en ce que** ladite plage de valeurs (B_inf - B_sup) comporte au moins une portion qui est délimitée par une limite inférieure (B_inf, B_int_inf) et par une limite supérieure (B_int_sup, B_sup), et dans laquelle la valeur intermédiaire du coefficient de filtrage (K22) est proportionnelle à la valeur du critère dynamique (C_dyn).

6. Procédé selon la revendication 5, **caractérisé en ce que** la fonction qui associe le coefficient de filtrage (K22) au critère dynamique (C_dyn), est une fonction continue globalement croissante.

7. Procédé selon l'une quelconque des revendications 1 à 6, **caractérisé en ce que** le signal (S_varacc) représentatif de la variation instantanée de l'accélération longitudinale du véhicule est élaboré par les moyens (16) d'élaboration du signal représentatif de la variation d'accélération en fonction du signal d'assiette instantanée (S_ass).

8. Procédé selon l'une quelconque des revendications 1 à 6, **caractérisé en ce que** les moyens (16) d'élaboration du signal représentatif de la variation d'accélération comportent des capteurs d'accélération longitudinale (19a, 19b).

9. Procédé selon l'une quelconque des revendication 3 à 8, **caractérisé en ce que** la limite inférieure (B_inf, B_int_inf) d'au moins une des portions de plage de valeurs du critère dynamique (C_dyn) est ajustable en fonction du signal représentatif des irrégularités de la route (S_route).

10. Procédé selon la revendication 9, **caractérisé en ce que** la valeur ajustable de la limite inférieure (B_inf, B_int_inf) est égale à la somme d'une valeur de référence (B_ref) plus la valeur du signal représentatif des irrégularités de la route (S_route).

11. Procédé selon la revendication 10, **caractérisé en ce que** le signal représentatif des irrégularités de la route (S_route) est élaboré à partir de signaux émis par des capteurs d'accélération longitudinale (19a, 19b).

12. Procédé selon la revendication 10, **caractérisé en ce que** le signal représentatif des irrégularités de la route (S_route_bis) est élaboré à partir du signal représentatif de l'assiette instantanée du véhicule (S_ass).

13. Procédé de correction de l'angle de site d'au moins un projecteur de véhicule automobile en fonction des variations d'assiette du véhicule, le véhicule comportant des moyens (12) pour élaborer un signal représentatif de l'assiette instantanée du véhicule (S_ass), des moyens (16) pour élaborer un signal représentatif des variations d'accélération longitudinale du véhicule (S_varacc) et des moyens (18) de correction de l'angle de site du projecteur, du type qui comporte :
- une première étape (E1') de comparaison au cours de laquelle on compare la valeur du signal représentatif des variations d'accélération (S_varacc) avec un seuil de commutation (39) déterminé;
- une deuxième étape (E2') de détermination d'un coefficient de filtrage (K22) au cours de laquelle on affecte au coefficient de filtrage (K22) une valeur maximale (K22_max) ou une valeur minimale (K22_min) selon que la comparaison de la première étape (E1') indique que la valeur du signal représentatif des variations d'accélération (S_varacc) est inférieure ou supérieure au seuil de commutation (39) ;
- une troisième étape (E3') de filtrage au cours de laquelle le signal représentatif de l'assiette (S_ass) est filtré par des moyens de filtrage (22) en fonction du coefficient de filtrage (K22) déterminé au cours de la deuxième étape (E2') ;
- une quatrième étape (E4') de correction de l'angle de site du projecteur par l'intermédiaire des moyens de correction (18), en fonction du signal filtré (S_ass_22),
**caractérisé en ce que** le véhicule comporte des moyens (14) pour élaborer un signal représentatif des irrégularités de la route (S_route), et **en ce que**, au cours de la deuxième étape (E2'), la valeur minimale (K22_min) du coefficient de filtrage (K22) est variable en fonction de la valeur du signal représentatif des irrégularités de la route (S_route).

14. Procédé selon la revendication 13, **caractérisé en ce que** le véhicule comporte des moyens (30) pour effectuer une moyenne sur le signal représentatif des irrégularités de la route (S_route), et **en ce que** la valeur minimale du coefficient de filtrage (K22_min) est proportionnelle à la moyenne (S_valmin) obtenue par l'intermédiaire desdits moyens (30).

15. Procédé selon la revendication 13 ou 14, **caractérisé en ce que**, lors de la première étape, le seuil de commutation (39) est déterminé en fonction de la valeur du signal représentatif des irrégularités de la route (S_route).

16. Procédé selon l'une quelconque des revendications 13 à 15, **caractérisé en ce que**, au cours de la deuxième étape (E2'), la valeur maximale (K22_max) du coefficient de filtrage (K22) est variable proportionnellement à la variation de la valeur minimale (K22_min).

## Claims

1. Method of correcting the angle of elevation of at least one motor vehicle headlight according to the variations in attitude of a vehicle, comprising means (12) for producing a signal (S_ass) representing the instantaneous attitude of the vehicle, means (14) for producing a signal (S_bruit) representing the magnitude of the irregularities in the road, means (16) for producing a signal (S_varacc) representing the magnitude in the variations in instantaneous longitudinal acceleration of the vehicle and means (18) for correcting the angle of elevation of the headlight,
**characterised in that** it comprises:
- a first step (E1) of calculating an instantaneous dynamic criterion (C_dyn) which is equal to the difference between the instantaneous value of the signal (S_varacc) representing the variation in acceleration and a signal (S_bruit) representing the magnitude of the irregularities in the road which is produced as a function of the instantaneous value of the signal representing the irregularities in the road (S_route);
- a second step (E2) of determining a filtering coefficient (K22), during which a maximum value (K22_max) or a minimum value (K22_min) is allocated to the filtering coefficient (K22) depending on whether the instantaneous dynamic criterion is positive or negative;
- a third filtering step (E3), during which the signal (S_ass) representing the attitude is filtered by filtering means (22) according to the filtering coefficient (K22) determined during the second step (E2); and
- a fourth step (E4) of correcting the angle of elevation of the headlight by means of the correction means (18), as a function of the filtered signal (S_ass_22) during the third step (E3).

2. Method according to claim 1, **characterised in that**, during the second step (E2), the minimum value (K22_min), the maximum value (K22_max) or at least an intermediate value (K22_nom) is allocated to the filtering coefficient (K22) depending on whether the value of the instantaneous dynamic criterion (C_dyn) is respectively less than a negative lower limit (B_inf), above a positive upper limit (B_sup), or lying in a range of values between the bottom limit (B_inf) and the top limit (B_sup).

3. Method according to claim 3, **characterised in that** the said range of values comprises at least one portion which is delimited by a lower limit (B_inf, B_int_inf) and by an upper limit (B_int_sup, B_sup), and in which the intermediate value of the filtering coefficient (K22) is a constant (K22_nom) which is independent of the value of the instantaneous dynamic criterion (C_dyn).

4. Method according to claim 3, **characterised in that** the function that associates the filtering coefficient (K22) with the dynamic criterion (C_dyn) is a function increasing in steps.

5. Method according to either one of claims 2 or 3, **characterised in that** the said range of values (B_inf - B_sup) comprises at least one portion which is delimited by a lower limit (B_inf, B_int_inf) and by an upper limit (B_int_sup, B_sup), and in which the intermediate value of the filtering coefficient (K22) is proportional to the value of the dynamic criterion (C_dyn).

6. Method according to claim 5, **characterised in that** the function that associates the filtering coefficient (K22) with the dynamic criterion (C_dyn) is a continuous function increasing overall.

7. Method according to any one of claims 1 to 6, **characterised in that** the signal (S_varacc) representing the instantaneous variation in the longitudinal acceleration of the vehicle is produced by the means (16) of producing the signal representing the variation in acceleration as a function of the instantaneous attitude signal (S_ass).

8. Method according to any one of claims 1 to 6, **characterised in that** the means (16) of producing the signal representing the variation in acceleration comprise longitudinal acceleration sensors (19a, 19b).

9. Method according to any one of claims 3 to 8, **characterised in that** the lower limit (B_inf, B_int_inf) of at least one of the portions of the range of values of the dynamic criterion (C_dyn) is adjustable according to the signal representing the irregularities in the road (S_route).

10. Method according to claim 9, **characterised in that** the adjustable value of the lower limit (B_inf, B_int_inf) is equal to the sum of a reference value (B_ref) plus the value of the signal representing the irregularities in the road (S_route).

11. Method according to claim 10, **characterised in that** the signal representing the irregularities in the road (S_route) is produced from signals emitted by longitudinal acceleration sensors (19a, 19b).

12. Method according to claim 10, **characterised in that** the signal representing the irregularities in the road (S_route_bis) is produced from the signal representing the instantaneous attitude of the vehicle (S_ass).

13. Method of correcting the angle of elevation of at least one motor vehicle headlight according to variations in attitude of the vehicle, the vehicle comprising means (12) for producing a signal representing the instantaneous attitude of the vehicle (S_ass), means (16) for producing a signal representing the variations in longitudinal acceleration of the vehicle (S_varacc) and means (18) of correcting the angle of elevation of the headlight, of the type that comprises:
- a first comparison step (E1') during which the value of the signal representing the variations in acceleration (S_varacc) is compared with a given switching threshold (39) ;
- a second step (E2') of determining a filtering coefficient (K22), during which a maximum value (K22_max) or a minimum value (K22_min) is allocated to the filtering coefficient (K22) depending on whether the comparison of the first step (E1') indicates that the value of the signal representing the variations in acceleration (S_varacc) is less than or greater than the switching threshold (39);
- a third filtering step (E3') during which the signal representing the attitude (S_ass) is filtered by filtering means (22) according to the filtering coefficient (K22) determined during the second step (E2') ;
- a fourth step (E4') of correcting the angle of elevation of the headlight by means of the correction means (18), according to the filtered signal (S_ass_22),
**characterised in that** the vehicle has means (14) for producing a signal representing the irregularities in the road (S_route), and **in that**, during the second step (E2'), the minimum value (K22_min) of the filtering coefficient (K22) is variable according to the value of the signal representing the variations in the road (S_route).

14. Method according to claim 13, **characterised in that** the vehicle has means (30) for effecting an average on the signal representing the irregularities in the road (S_route), and **in that** the minimum value of the filtering coefficient (K22_min) is proportional to the average (S_valmin) obtained by means of the said means (30).

15. Method according to claim 13 or 14, **characterised in that**, during the first step, the switching threshold (39) is determined according to the value of the signal representing the irregularities in the road (S_route).

16. Method according to any one of claims 13 to 15,
**characterised in that**, during the second step (E2'), the maximum value (K22_max) of the filtering coefficient (K22) is variable proportionally to the variation in the minimum value (K22_min).

## Patentansprüche

1. Verfahren zur Korrektur des Höhenwinkels wenigstens eines Kraftfahrzeugscheinwerfers in Abhängigkeit von Lageveränderungen eines Fahrzeugs, mit Mitteln (12) zum Erzeugen eines für die momentane Fahrzeuglage repräsentativen Signals (S_ass), Mitteln (14) zum Erzeugen eines für die Amplitude der Straßenunebenheiten repräsentativen Signals (S_bruit), Mitteln (16) zum Erzeugen eines für den Grad der Veränderungen der momentanen Längsbeschleunigung repräsentativen Signals (S_varacc) und Mitteln (18) zur Korrektur des Höhenwinkels des Scheinwerfers,
**dadurch gekennzeichnet, dass** es umfasst:
- einen ersten Schritt (E1) zur Berechnung eines momentanen dynamischen Kriteriums (C_dyn), das der Differenz zwischen dem momentanen Wert des für die Beschleunigungsveränderung repräsentativen Signals (S_varacc) und einem für die Amplitude der Straßenunebenheiten repräsentativen Signals (S_bruit) entspricht, welches in Abhängigkeit von dem momentanen Wert des für die Straßenunebenheiten repräsentativen Signals (S_route) erzeugt wird;
- einen zweiten Schritt (E2) zur Bestimmung eines Filterkoeffizienten (K22), in dessen Verlauf dem Filterkoeffizienten (K22) ein Höchstwert (K22_max) oder ein Minimalwert (K22_min) zugewiesen wird, je nachdem, ob das momentane dynamische Kriterium positiv oder negativ ist;
- einen dritten Schritt (E3) zum Filtern, in dessen Verlauf das für die Fahrzeuglage repräsentative Signal (S_ass) durch Filtermittel (22) in Abhängigkeit von dem im Verlauf des zweiten Schritts (E2) bestimmten Filterkoeffizienten (K22) gefiltert wird; und
- einen vierten Schritt (E4) zur Korrektur des Höhenwinkels des Scheinwerfers mit Hilfe der Korrekturmittel (18) in Abhängigkeit von dem während des dritten Schritts (E3) gefilterten Signal (S_ass_22).

2. Verfahren nach Anspruch 1,
**dadurch gekennzeichnet, dass** dem Filterkoeffizienten (K22) im Verlauf des zweiten Schritts (E2) der Minimalwert (K22_min), der Höchstwert (K22_max) oder wenigstens ein Zwischenwert (K22_nom) zugewiesen wird, je nachdem, ob der Wert des momentanen dynamischen Kriteriums (C_dyn) unter einem negativen Infimum (B_inf) oder über einem positiven Supremum (B_sup) oder innerhalb eines Wertebereichs zwischen dem Infimum (B_inf) und dem Supremum (B_sup) liegt.

3. Verfahren nach Anspruch 2,
**dadurch gekennzeichnet, dass** der Wertebereich wenigstens einen Abschnitt umfasst, der durch eine untere Grenze (B_inf, B_int_inf) und eine obere Grenze (B_int_sup, B_sup) begrenzt ist und in dem der Zwischenwert des Filterkoeffizienten (K22) eine Konstante (K22_nom) ist, die von dem Wert des momentanen dynamischen Kriteriums (C_dyn) unabhängig ist.

4. Verfahren nach Anspruch 3,
**dadurch gekennzeichnet, dass** die Funktion, die dem dynamischen Kriterium (C_dyn) den Filterkoeffizienten (K22) zuordnet, eine schrittweise steigende Funktion ist.

5. Verfahren nach einem der Ansprüche 2 oder 3,
**dadurch gekennzeichnet, dass** der Wertebereich (B_inf - B_sup) wenigstens einen Abschnitt umfasst, der durch eine untere Grenze (B_inf, B_int inf) und eine obere Grenze (B_int_sup, B_sup) begrenzt ist und in dem der Zwischenwert des Filterkoeffizienten (K22) zu dem Wert des dynamischen Kriteriums (C_dyn) proportional ist.

6. Verfahren nach Anspruch 5,
**dadurch gekennzeichnet, dass** die Funktion, die dem dynamischen Kriterium (C_dyn) den Filterkoeffizienten (K22) zuordnet, eine stetige, insgesamt steigende Funktion ist.

7. Verfahren nach einem der Ansprüche 1 bis 6,
**dadurch gekennzeichnet, dass** das für die momentane Veränderung der Längsbeschleunigung des Fahrzeugs repräsentative Signal (S_varacc) durch die Mittel (16) zum Erzeugen des für die Beschleunigungsveränderung repräsentativen Signals in Abhängigkeit von dem Signal der momentanen Fahrzeuglage (S_ass) erzeugt wird.

8. Verfahren nach einem der Ansprüche 1 bis 6,
**dadurch gekennzeichnet, dass** die Mittel (16) zum Erzeugen des für die Beschleunigungsveränderung repräsentativen Signals Längsbeschleunigungssensoren (19a; 19b) umfassen.

9. Verfahren nach einem der Ansprüche 3 bis 8,
**dadurch gekennzeichnet, dass** die untere Grenze (B_inf, B_int_inf) wenigstens eines der Abschnitte des Wertebereichs des dynamischen Kriteriums (C_dyn) in Abhängigkeit von dem für die Straßenunebenheiten repräsentativen Signals (S_route) einstellbar ist.

10. Verfahren nach Anspruch 9,
**dadurch gekennzeichnet, dass** der einstellbare Wert der unteren Grenze (B_inf, B_int_inf) der Summe aus einem Referenzwert (B_ref) plus dem Wert des für die Straßenunebenheiten repräsentativen Signals (S_route) entspricht.

11. Verfahren nach Anspruch 10,
**dadurch gekennzeichnet, dass** das für die Straßenunebenheiten repräsentative Signal (S_route) anhand von Signalen erzeugt wird, die von Längsbeschleunigungssensoren (19a, 19b) abgegeben werden.

12. Verfahren nach Anspruch 10,
**dadurch gekennzeichnet, dass** das für die Straßenunebenheiten repräsentative Signal (S_route_bis) anhand des für die momentane Fahrzeuglage repräsentativen Signals (S_ass) erzeugt wird.

13. Verfahren zur Korrektur des Höhenwinkels wenigstens eines Kraftfahrzeugscheinwerfers in Abhängigkeit von Lageveränderungen des Fahrzeugs, wobei das Fahrzeug Mittel (12) zum Erzeugen eines für die momentane Fahrzeuglage repräsentativen Signals (S_ass), Mittel (16) zum Erzeugen eines für die Veränderungen der Längsbeschleunigung des Fahrzeugs repräsentativen Signals (S_varacc) und Mittel (18) zur Korrektur des Höhenwinkels des Scheinwerfers umfasst, des Typs umfassend:
- einen ersten Schritt (E1') zum Vergleichen, in dessen Verlauf der Wert des für die Beschleunigungsveränderungen repräsentativen Signals (S_varacc) mit einer bestimmten Schaltschwelle (39) verglichen wird;
- einen zweiten Schritt (E2') zur Bestimmung eines Filterkoeffizienten (K22), in dessen Verlauf dem Filterkoeffizienten (K22) ein Höchstwert (K22_max) oder ein Minimalwert (K22_min) zugewiesen wird, je nachdem, ob der Vergleich aus dem ersten Schritt (E1') angibt, dass der Wert des für die Beschleunigungsveränderungen repräsentativen Signals (S_varacc) unter oder über der Schaltschwelle (39) liegt;
- einen dritten Schritt (E3') zum Filtern, in dessen Verlauf das für die Fahrzeuglage repräsentative Signal (S_ass) durch Filtermittel (22) in Abhängigkeit von dem im Verlauf des zweiten Schritts (E2') bestimmten Filterkoeffizienten (K22) gefiltert wird;
- einen vierten Schritt (E4') zur Korrektur des Höhenwinkels des Scheinwerfers mit Hilfe der Korrekturmittel (18) in Abhängigkeit von dem gefilterten Signal (S_ass_22),
**dadurch gekennzeichnet, dass** das Fahrzeug Mittel (14) zum Erzeugen eines für die Straßenunebenheiten repräsentativen Signals (S_route) umfasst, und dass der Minimalwert (K22_min) des Filterkoeffizienten (K22) im Verlauf des zweiten Schritts (E2') in Abhängigkeit vom Wert des für die Straßenunebenheiten repräsentativen Signals (S_route) veränderlich ist.

14. Verfahren nach Anspruch 13,
**dadurch gekennzeichnet, dass** das Fahrzeug Mittel (30) zum Bilden eines Mittelwertes des für die Straßenunebenheiten repräsentativen Signals (S_route) umfasst, und dass der Minimalwert (K22_min) des Filterkoeffizienten zu dem mit Hilfe dieser Mittel (30) erzielten Mittelwert (S_valmin) proportional ist.

15. Verfahren nach Anspruch 13 oder 14,
**dadurch gekennzeichnet, dass** die Schaltschwelle (39) während des ersten Schritts in Abhängigkeit vom Wert des für die Straßenunebenheiten repräsentativen Signals (S_route) bestimmt wird.

16. Verfahren nach einem der Ansprüche 13 bis 15,
**dadurch gekennzeichnet, dass** der Höchstwert (K22_max) des Filterkoeffizienten (K22) im Verlauf des zweiten Schritts (E2') proportional zur Veränderung des Minimalwertes (K22_min) veränderlich ist.
